# FASCICULE DE BREVET EUROPEEN

(11) **EP 4 378 761 B1**
(45) Date de publication et mention de la délivrance du brevet: **13.08.2025**
(21) Numéro de dépôt: 23211815.8
(22) Date de dépôt: 23.11.2023
(51) Int. Cl.: B60R 11/06

(54) **AGENCEMENT D'UN SUPPORT DE ROULEAU DE CÂBLE DE CHARGE À L'INTÉRIEUR D'UN COFFRE DE VÉHICULE AUTOMOBILE**
HALTERANORDNUNG EINER LADEKABELROLLE IM INNEREN EINES LADERAUMS EINES FAHRZEUGS
HOLDER ARRANGEMENT FOR A CHARGING CABLE REEL AT THE INTERIOR OF A LUGGAGE COMPARTMENT OF A VEHICLE

(30) Priorité: 02.12.2022 FR 2212715
(43) Date de publication de la demande: 05.06.2024
(73) Titulaire: Renault s.a.s, 92100 Boulogne Billancourt (FR)
(72) Inventeur: DEYSSON, Guillaume, 78280 GUYANCOURT (FR)

(56) Documents cités:
- FR-A1- 2 886 243
- FR-A1- 2 961 143

## Description

L'invention concerne un agencement d'un support de rouleau de câble de charge à l'intérieur d'un coffre de véhicule automobile comportant un panneau en tôle et une paroi d'habillage intérieur sensiblement verticale, le support étant formé par un corps allongé d'axe horizontal comportant une extrémité visible et une extrémité cachée, monté mobile à translation, à l'intérieur d'un logement débouchant par une ouverture dans la paroi d'habillage et s'étendant à proximité du panneau, entre une position rangée dans laquelle le corps est à l'intérieur du logement et son extrémité visible affleure la surface de la paroi et une position sortie dans laquelle le corps est au moins en partie à l'extérieur du logement.

Les véhicules électriques comportent un câble de charge qui doit être rangé lorsqu'il n'est pas utilisé. Il est généralement entreposé au fond du coffre mais il risque de se déplacer lorsque le véhicule roule, voire de s'emmêler ou de s'abîmer. De plus, il peut être gênant si l'on souhaite ranger autre chose à l'intérieur du coffre.

FR2886243A1 divulgue un agencement d'un support de rouleau de câble de charge à l'intérieur d'un coffre conformément au préambule de la revendication 1.

On connait dans l'état de la technique des sacs permettant de ranger ces rouleaux.

Cependant ce type de rangement occupe le fond du coffre et peut aussi se déplacer et se détériorer avec le temps. En outre, par manque de praticité, l'utilisateur du véhicule ne prend pas toujours la peine de ranger le câble dans le sac, le coffre étant alors encombré par le sac et le câble posé à côté.

Afin de pallier ces inconvénients, l'invention a pour objet un agencement d'un support qui soit pratique et solide et de conception simple.

A cet effet, l'invention propose un agencement d'un support du type cité ci-dessus, caractérisé en ce que le corps est creux et en ce que son extrémité visible est munie d'une grille frontale.

Selon d'autres caractéristiques de l'invention :
- L'extrémité visible du corps creux est évasée et coopère, lorsque le support est en position rentrée, avec un renfoncement ménagé dans la paroi d'habillage, autour de l'ouverture du logement.
- La grille comporte un moyen de préhension.
- L'agencement comporte des moyens de verrouillage du support en position rangée et sortie.
- Les moyens de verrouillage sont constitués par un doigt porté par l'extrémité cachée du corps apte à coopérer avec un premier orifice ménagé dans le logement à proximité du panneau et un deuxième orifice ménagé dans le logement à proximité de son ouverture
- Le support comporte un moyen de limitation du mouvement du corps selon une direction verticale lorsqu'il est en position sortie d'utilisation.
- Le support est un aérateur.
- Le support est un module de haut-parleur, dans lequel le haut-parleur est porté par l'extrémité visible du corps creux et recouvert par la grille frontale, et dans lequel des moyens d'alimentation électrique du haut-parleur s'étendent depuis le haut-parleur à l'intérieur du corps creux jusqu'à son extrémité cachée.
- Le logement comporte une lumière de guidage des moyens d'alimentation électrique lors du passage du support d'une position à une autre.

D'autres caractéristiques et avantages de l'invention apparaîtront à la lecture de la description d'exemples de réalisation d'un conduit en référence aux dessins annexés dans lesquels :
[Fig. 1] La figure 1 est une vue schématique en coupe transversale du support selon l'invention en position rangée.
[Fig. 2] La figure 2 est une vue schématique en coupe transversale du support selon l'invention en position sortie.
[Fig.3] La figure 3 est une vue schématique en coupe transversale d'un détail du support des figures 1 et 2.
[Fig. 4] La figure 4 est une vue en perspective du dessous du support des figures 1 et 2.
[Fig. 5] La figure 5 est une vue en perspective du support de la figure 2.

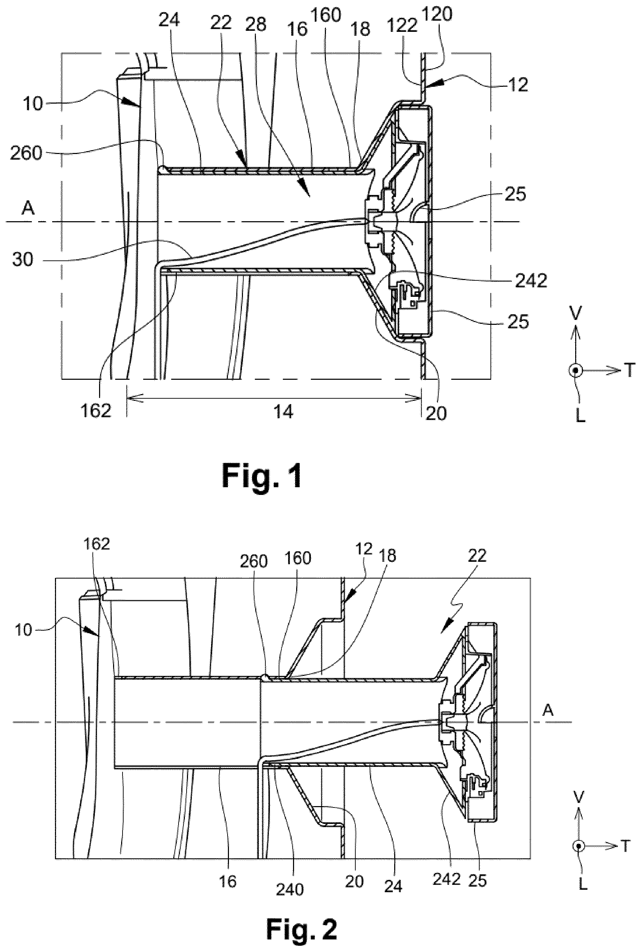

Dans la description qui suit, nous prendrons à titre non limitatif une orientation longitudinale, verticale et transversale indiquée par le trièdre L,V,T des figures 1 à 5. Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que décrit aux figures 1 et 2, un coffre de véhicule automobile (non représenté) comporte un panneau de côté de caisse 10 et une paroi de garniture intérieur 12 d'orientation sensiblement longitudinale.

Le panneau de côté de caisse 10 est situé à distance de la paroi de garniture 12 de façon à ménager un espace 14 entre le panneau 10 et la paroi 12.

La paroi 12 présente une face intérieure 120 tournée vers l'intérieur du véhicule et une face extérieure 122, tournée du côté du panneau 10.

La face extérieure 122 de la paroi 12 comporte un logement 16 d'axe A d'orientation sensiblement transversale. Une extrémité 160 du logement 16 débouche dans la paroi 12 en formant une ouverture 18. Une extrémité opposée 162 est située entre le panneau 10 et la paroi 12, à proximité du panneau 10.

Le logement 16 peut avoir la forme d'un cylindre d'axe A par exemple.

Dans le mode de réalisation présenté ici, l'ouverture 18 est située à l'intérieur d'un renfoncement 20 formé dans la face intérieure 120 de la paroi 12.

Un support 22 est monté coulissant à l'intérieur du logement 16.

Le support 22 comporte un corps creux 24, d'axe d'orientation sensiblement transversale confondu avec l'axe A, muni d'une extrémité cachée 240 située entre le panneau 10 et la paroi 12 et une extrémité visible 242 située du côté de la face intérieure 120 de la paroi 12.

Le corps 24 est de forme complémentaire de celle du logement 16 et peut aussi être cylindrique.

Dans le mode de réalisation décrit ici, l'extrémité visible 242 du corps creux 24 est évasée et surmontée par une grille frontale 25.

Ainsi, le support 22 est apte à occuper une position rangée dans laquelle le corps creux 24 est à l'intérieur du logement 16, son extrémité visible évasée 242 étant alors reçue dans le renfoncement 20 de façon que son extrémité 242 affleure la surface de la face intérieure 120 de la paroi 12. Le support 22 est aussi apte à occuper une position sortie d'utilisation dans laquelle son corps 24 est située au moins en partie hors du logement 16 pour s'étendre à l'intérieur du coffre.

Le corps 24 comporte des moyens de verrouillage 26 du support en position rangée et en position sortie d'utilisation.

Ces moyens de verrouillage 26 sont constitués par un pion 260 monté sur une lame élastique 262 portée par une partie supérieure du corps 24 à proximité de son extrémité cachée 240, apte à coopérer avec un premier orifice 264 ménagé dans la paroi du logement 16, à proximité de l'extrémité 162 du logement 16 et un deuxième orifice 266 ménagé à proximité de l'ouverture 18.

Toutefois, il peut être prévu que l'orifice 266 soit à une certaine distance du bord de l'ouverture 18 du logement 16 de façon à former un moyen de limitation du mouvement du corps 24 selon une direction verticale lorsqu'il est en position sortie d'utilisation et soumis au poids de l'objet qu'il supporte.

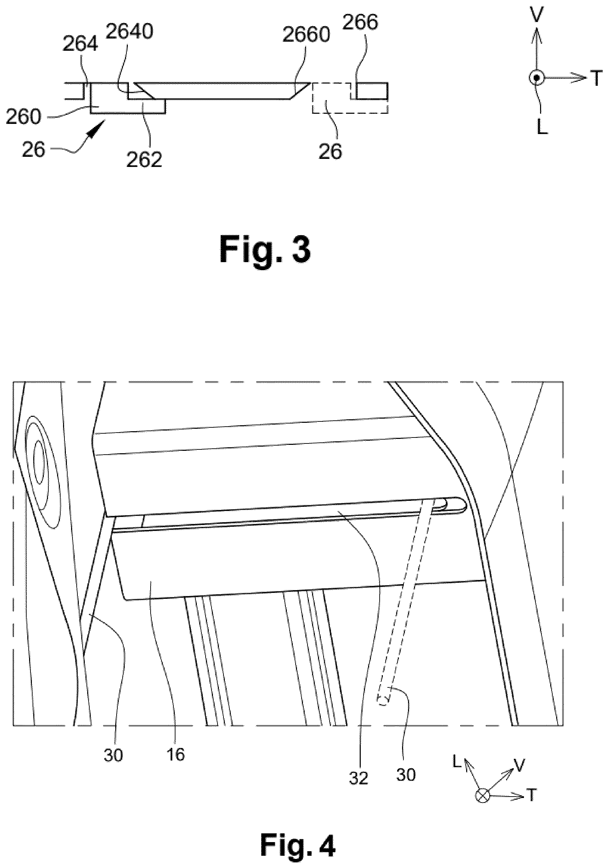

A la figure 3, le moyen de verrouillage 26 a été représenté en traits plein dans une position correspondant à la configuration rangée du support 22 à l'intérieur du logement 6 et en traits pointillés dans une position correspondant à la configuration sortie du support 22. Afin de faciliter le déverrouillage du pion 260, le premier orifice 264 comporte une pente 2640 orientée de façon que le pion 260 glisse le long de la pente lorsque l'on tire sur le corps 24 afin de le dégager de l'orifice 264 et le deuxième orifice 266 comporte une pente 2660 orientée de façon que le pion 260 glisse le long de la pente et de le dégager de l'orifice 266 lorsqu'on appuie sur le corps 24.

La grille frontale 25 comporte un moyen de préhension 250 permettant de tirer sur le support de façon à l'extraire du logement 16.

Dans le mode de réalisation décrit ici, le support est constitué par un module de haut-parleur 28. Le haut-parleur 28 est porté par l'extrémité visible 242 du corps 24 et est surmonté par la grille frontale 25. Le haut-parleur 28 comporte de plus un câble d'alimentation électrique 30 qui s'étend à l'intérieur du corps 24 jusqu'à son extrémité cachée 240.

A la figure 4, le câble d'alimentation 30 est représenté en traits pleins lorsque le support 22 est en position rangée et en traits pointillés lorsque le support est en position sortie. Une partie inférieure du logement 16 comporte une lumière 32, s'étendant parallèlement à son axe A, de façon à permettre le coulissement du corps 24 à l'intérieur du logement 16 en évitant tout risque de coincement du câble d'alimentation 30 entre le corps 24 et le logement 16.

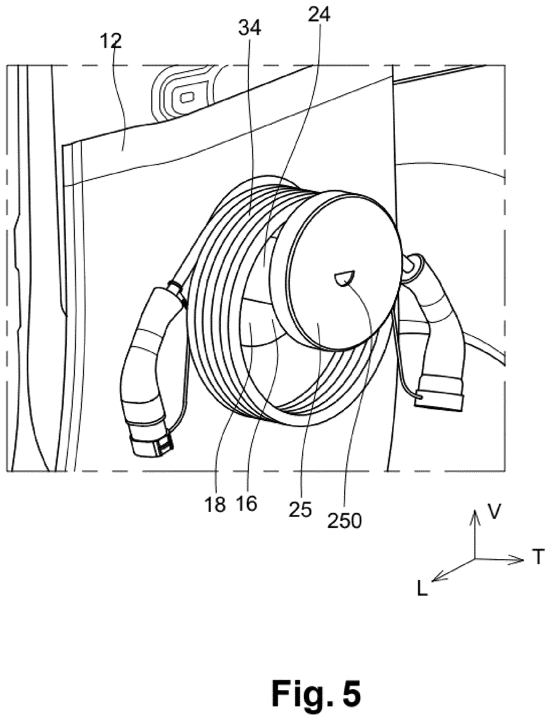

Ainsi lorsqu'un utilisateur souhaite ranger un rouleau de câble de charge 34 à l'intérieur du coffre, il tire sur le support 22 à l'aide du moyen de préhension 250. La traction exercée, permet de dégager le pion de verrouillage 260 en le faisant glisser le long de la pente 2640 de l'orifice 264. L'utilisateur tire le support 22 jusqu'à ce que le pion 260 s'enclenche à l'intérieur de l'orifice 266. Il peut alors disposer le rouleau de câble 34 autour du corps 24, comme représenté à la figure 5. Lors du roulage, le rouleau 34 sera maintenu entre la paroi de garniture 12 et la grille frontale 25.

Lorsque l'utilisateur veut faire repasser le support en position rangée de non-utilisation, il lui suffit d'exercer une pression sur la grille 25, ce qui va faire glisser le pion 260 le long de la pente 2660 de l'orifice 266 jusqu'à ce qu'il en soit dégagé. Après coulissement complet du corps 24 à l'intérieur du logement 16, le pion 260 va s'enclencher automatiquement à l'intérieur de l'orifice 264.

Dans un autre mode de réalisation, non représenté, le support 22 est un module d'aération permettent de faire circuler de l'air depuis l'extérieur du véhicule vers le coffre en passant par le corps creux 24 et la grille 25.

## Revendications

1. Agencement d'un support (22) de rouleau de câble de charge (34) à l'intérieur d'un coffre de véhicule automobile comportant un panneau en tôle (10) et une paroi d'habillage intérieur (12) sensiblement verticale, le support (22) étant formé par un corps allongé (24) d'axe horizontal (A) comportant une extrémité visible (242) et une extrémité cachée (240), monté mobile à translation, à l'intérieur d'un logement (16) débouchant par une ouverture (18) dans la paroi d'habillage (12) et s'étendant à proximité du panneau (10), entre une position rangée dans laquelle le corps (24) est à l'intérieur du logement (16) et son extrémité visible (242) affleure la surface de la paroi d'habillage (12) et une position sortie dans laquelle le corps (24) est au moins en partie à l'extérieur du logement (16), **caractérisé en ce que** le corps (24) est creux et **en ce que** son extrémité visible (242) est munie d'une grille frontale (25).

2. Agencement d'un support (22) selon la revendication 1, **caractérisé en ce que** l'extrémité visible (242) du corps creux (24) est évasée et coopère, lorsque le support (22) est en position rentrée, avec un renfoncement (20) ménagé dans la paroi d'habillage (1), autour de l'ouverture (18) du logement (16).

3. Agencement d'un support (22) selon la revendication 1 ou 2, **caractérisé en ce que** la grille (25) comporte un moyen de préhension (250).

4. Agencement d'un support (22) selon l'une des revendications 1 à 3, **caractérisé en ce qu'**il comporte des moyens de verrouillage (26) du support (22) en position rangée et sortie.

5. Agencement d'un support (22) selon la revendication précédente, **caractérisé en ce que** les moyens de verrouillage (26) sont constitués par un doigt (260) porté par l'extrémité cachée (240) du corps (24) apte à coopérer avec un premier orifice (264) ménagé dans le logement (16) à proximité du panneau (10) et un deuxième orifice (266) ménagé dans le logement (16) à proximité de son ouverture (18)

6. Agencement d'un support (22) selon l'une des revendications précédentes, **caractérisé en ce que** le support (22) comporte un moyen de limitation du mouvement du corps (24) selon une direction verticale lorsqu'il est en position sortie d'utilisation.

7. Agencement d'un support (22) selon l'une des revendications précédentes, **caractérisé en ce que** le support (22) est un aérateur.

8. Agencement d'un support (22) selon l'un des revendications 1 à 6, **caractérisé en ce que** le support (22) est un module de haut-parleur (28), dans lequel le haut-parleur (28) est porté par l'extrémité visible (242) du corps creux (24) et est recouvert par la grille frontale (25), et **en ce que** des moyens d'alimentation électrique (30) du haut-parleur (28) s'étendent depuis le haut-parleur (28) à l'intérieur du corps creux (24) jusqu'à son extrémité cachée (240).

9. Agencement d'un support (22) selon la revendication 8, **caractérisé en ce que** le logement (16) comporte une lumière de guidage (32) des moyens d'alimentation électrique (30) lors du passage du support (22) d'une position à une autre.

## Patentansprüche

1. Anordnung eines Halters (22) einer Ladekabelrolle (34) im Inneren eines Kraftfahrzeugkofferraums, der eine Tafel aus Blech (10) und eine im Wesentlichen vertikale innere Verkleidungswand (12) umfasst, wobei der Halter (22) durch einen länglichen Körper (24) mit horizontaler Achse (A) gebildet wird, der ein sichtbares Ende (242) und ein verborgenes Ende (240) umfasst, im Inneren einer Aufnahme (16), die durch ein Fenster (18) in der Verkleidungswand (12) mündet, translatorisch beweglich montiert ist und sich in der Nähe der Tafel (10) zwischen einer verstauten Position, in welcher der Körper (24) im Inneren der Aufnahme (16) ist und sein sichtbares Ende (242) bündig mit der Oberfläche der Verkleidungswand (12) ist, und einer ausgezogenen Position, in welcher der Körper (24) mindestens zum Teil außerhalb der Aufnahme (16) ist, erstreckt, **dadurch gekennzeichnet, dass** der Körper (24) hohl ist und dass sein sichtbares Ende (242) mit einem stirnseitigen Gitter (25) versehen ist.

2. Anordnung eines Halters (22) nach Anspruch 1, **dadurch gekennzeichnet, dass** das sichtbare Ende (242) des hohlen Körpers (24) aufgeweitet ist und, wenn der Halter (22) in der eingezogenen Position ist, mit einer Vertiefung (20) zusammenwirkt, die in der Verkleidungswand (1) um das Fenster (18) der Aufnahme (16) herum ausgebildet ist.

3. Anordnung eines Halters (22) nach Anspruch 1 oder 2, **dadurch gekennzeichnet, dass** das Gitter (25) ein Greifmittel (250) umfasst.

4. Anordnung eines Halters (22) nach einem der Ansprüche 1 bis 3, **dadurch gekennzeichnet, dass** es Verriegelungsmittel (26) zum Verriegeln des Halters (22) in der verstauten und ausgezogenen Position umfasst.

5. Anordnung eines Halters (22) nach dem vorhergehenden Anspruch, **dadurch gekennzeichnet, dass** die Verriegelungsmittel (26) aus einem Finger (260) bestehen, der von dem verborgenen Ende (240) des Körpers (24) getragen wird und geeignet ist, mit einer ersten Öffnung (264), die in der Aufnahme (16) in der Nähe der Tafel (10) ausgebildet ist, und einer zweiten Öffnung (266), die in der Aufnahme (16) in der Nähe von deren Fenster (18) ausgebildet ist, zusammenzuwirken

6. Anordnung eines Halters (22) nach einem der vorhergehenden Ansprüche, **dadurch gekennzeichnet, dass** der Halter (22) ein Mittel zur Begrenzung der Bewegung des Körpers (24) entlang einer vertikalen Richtung, wenn er in der ausgezogenen Verwendungsposition ist, umfasst.

7. Anordnung eines Halters (22) nach einem der vorhergehenden Ansprüche, **dadurch gekennzeichnet, dass** der Halter (22) ein Lüfter ist.

8. Anordnung eines Halters (22) nach einem der Ansprüche 1 bis 6, **dadurch gekennzeichnet, dass** der Halter (22) ein Lautsprechermodul (28) ist, bei dem der Lautsprecher (28) von dem sichtbaren Ende (242) des hohlen Körpers (24) getragen wird und durch das stirnseitige Gitter (25) abgedeckt wird, und dass Stromversorgungsmittel (30) des Lautsprechers (28) sich von dem Lautsprecher (28) aus im Inneren des hohlen Körpers (24) bis zu dessen verborgenem Ende (240) erstrecken.

9. Anordnung eines Halters (22) nach Anspruch 8, **dadurch gekennzeichnet, dass** die Aufnahme (16) einen Führungsschlitz (32) für die Stromversorgungsmittel (30) beim Übergang des Halters (22) von einer Position zu einer anderen umfasst.

## Claims

1. Arrangement of a holder (22) for a roll of charging cable (34) inside a motor vehicle boot having a sheet metal panel (10) and a substantially vertical inner trim wall (12), the holder (22) being formed by an elongate body (24) of horizontal axis (A), having a visible end (242) and a hidden end (240), mounted so as to be able to move in translation, inside a housing (16) that opens via an opening (18) in the trim wall (12) and extending close to the panel (10), between a stowed position in which the body (24) is inside the housing (16) and its visible end (242) is flush with the surface of the trim wall (12) and an extended position in which the body (24) is at least partially outside the housing (16), **characterized in that** the body (24) is hollow and **in that** its visible end (242) is provided with a front grille (25).

2. Arrangement of a holder (22) according to Claim 1, **characterized in that** the visible end (242) of the hollow body (24) is flared and cooperates, when the holder (22) is in the retracted position, with a recess (20) provided in the trim wall (1), around the opening (18) of the housing (16).

3. Arrangement of a holder (22) according to Claim 1 or 2, **characterized in that** the grille (25) has a gripping means (250).

4. Arrangement of a holder (22) according to one of Claims 1 to 3, **characterized in that** it has means (26) for locking the holder (22) in the stowed and extended position.

5. Arrangement of a holder (22) according to the preceding claim, **characterized in that** the locking means (26) are constituted by a finger (260) that is borne by the hidden end (240) of the body (24) and is able to cooperate with a first orifice (264) provided in the housing (16) close to the panel (10) and a second orifice (266) provided in the housing (16) close to its opening (18).

6. Arrangement of a holder (22) according to one of the preceding claims, **characterized in that** the holder (22) has a means for limiting the movement of the body (24) in a vertical direction when it is in the extended position of use.

7. Arrangement of a holder (22) according to one of the preceding claims, **characterized in that** the holder (22) is an air vent.

8. Arrangement of a holder (22) according to one of Claims 1 to 6, **characterized in that** the holder (22) is a loudspeaker (28) module, wherein the loudspeaker (28) is borne by the visible end (242) of the hollow body (24) and is covered by the front grille (25), and **in that** electrical power supply means (30) of the loudspeaker (28) extend from the loudspeaker (28) inside the hollow body (24) as far as its hidden end (240).

9. Arrangement of a holder (22) according to Claim 8, **characterized in that** the housing (16) has an aperture (32) for guiding the electrical power supply means (30) during the passage of the holder (22) from one position to another.
